# EUROPÄISCHE PATENTSCHRIFT

(11) **EP 0 336 332 B1**
(45) Veröffentlichungstag und Bekanntmachung des Hinweises auf die Patenterteilung: **27.10.1993**
(21) Anmeldenummer: 89105802.6
(22) Anmeldetag: 03.04.1989
(51) Int. Cl.: B65G 49/06, B66C 1/02

(54) **Vorrichtung zum Greifen, Auf- und Abstapeln und Fördern von Glastafeln**
Apparatus for picking-up, stacking and destacking and transporting glass-panes
Dispositif pour prendre, empiler et désempiler et transporter des feuilles de verre

(30) Priorität: 04.04.1988 DD 314361; 11.04.1988 DD 314585; 21.07.1988 DD 318168
(43) Veröffentlichungstag der Anmeldung: 11.10.1989
(73) Patentinhaber: Torgauer Maschinenbau GmbH, D-04860 Torgau (DE)
(72) Erfinder: Weber, Hans-Joachim, D-04860 Torgau (DE); Klaus, Kurt, D-04886 Beilrode (DE); Horn, Herbert, D-04860 Klitzschen (DE); Spaeth, Hubert, D-04860 Torgau (DE)
(74) Vertreter: Türk, Gille, Hrabal, Leifert

(56) Entgegenhaltungen:
- BE-A- 900 669
- CH-A- 87 815
- FR-A- 2 096 406
- FR-A- 2 099 289
- GB-A- 1 165 382
- US-A- 3 178 041
- US-A- 3 774 783

## Beschreibung

Die Erfindung betrifft eine Vorrichtung zum Greifen, Auf- und Abstapeln von tafel- oder plattenförmigen Werkstücken wie Glastafeln auf einen oder von einem nahezu senkrecht stehenden Tafelblock von einer oder auf eine nahezu senkrecht angeordnete Fertigungslinie und zum Fördern der Werkstücke von einer Bearbeitungseinrichtung zu einer anderen oder zu Ablagerungsplätzen.

Es ist eine Vielzahl von Vorrichtungen bekannt, um Glastafeln zu greifen, zu stapeln und zu fördern.
So sind Vakuumgreifer bekannt, bei denen die Hubbewegung und die Anpassung an die zu greifenden Gegenstände entweder durch Federn (DD 251 331 A1, DD 249 239 A1, DD-A-72 135) oder durch zusätzliche Zylinder-Kolbenanordnungen (DE-B-1 962 273, DD-A-143 754, DE-B-1 966 112) erfolgt.
Die bekannten technischen Lösungen sind insbesondere bei Auf- und Abstapelgeräten für Glastafeln nicht (DE-B-1 966 112, DE-B-1 962 273, DD-A-72 135, DD 249 239 A1) oder nur bedingt (DD 251 331 A1, DD-A-143 754) geeignet.

Nachteilig bei vielen bekannten Lösungen ist, daß sie nur begrenzt für ein nahezu senkrechtes Greifen von Gegenständen in Verbindung mit Krananlagen für einen nahezu waagerechten Transport von z. B. Glastafeln verwendet werden können. Vorrichtungen, die eine Eigenbewegung ausführen, haben den Nachteil, daß verschleißende Teile wie Kolben, Zylinder und Dichtungen für die Bewegung der Dichtlippe hin zum oder weg vom zu befördernden Gegenstand sorgen, also ein hoher maschineller Aufwand erforderlich ist. Damit verbunden ist eine hohe Störanfälligkeit und Lagerhaltung an Verschleißteilen.
Ungünstig ist, wenn bei in Gruppen zum Einsatz kommenden Greifern bei unterschiedlichen und vor allem wechselnden Formaten einzelne Greifer oder Sauger nicht benötigt werden. Um ein Zerstören der Sauger, z. B. durch die Schnittkanten bei Glastafeln, zu vermeiden, ist ein hoher technischer Aufwand erforderlich, vor allem bei automatisiert arbeitenden Anlagen.

Setzen die Sauger nicht genau senkrecht auf und führen demzufolge eine Relativbewegung zum Gegenstand aus, so besteht z. B. bei Glastafeln oder Möbelplatten die Gefahr der Kratzerbildung.

Das Vereinzeln von Glastafeln beim Abstapeln von einem Glastafelblock wird allgemein so vorgenommen, daß die oberste Glastafel verschoben oder Luft zwischen die Glastafeln eingeblasen bzw. die oberste Glastafel auf einer vorbestimmten Bahn vom Glastafelblock gelöst wird. Außerdem ist es bekannt, mit Hilfe eines Abnahmemeßkopfes die Vereinzelung der jeweils oberen Glastafel eines Glastafelblockes mittels Saugern an Längs- und Querführungen vorzunehmen (DE-A-33 36 937).

Für das Auf- und Abstapeln selbst ist es beispielsweise bekannt, die Bewegungsabläufe mit Pneumatikzylindern über Längsführungen bzw. Koppelgetriebe und Längsführungen zu realisieren
(DE-A-21 30 592, DE-A-24 31 901, DE-A-25 16 884, DE 27 15 801 C2, DE 34 27 365 A1, DE 34 38 268 C2, DE 35 33 752 A1, EP 0 222 711 A1).

Die bekannten Lösungen dienen meist dazu, Glastafeln von einer nahezu senkrechten in eine waagerechte Lage umzustapeln oder umgekehrt.

Der Nachteil bei den bekannten Lösungen ist, daß der apparative Aufwand durch die Verwendung von Zuführeinrichtungen wie Transportwagen, Takteinrichtungen oder Förderbänder sehr hoch ist und demzufolge eine Anpassung des Glastafelblockes an die Auf- und Abstapelgeräte nur äußerst kompliziert ausgeführt werden kann. Außerdem sind die bekannten Vorrichtungen an speziell für diesen Zweck angepaßte Transportmittel, z. B. Wagen oder Paletten, und vor allem an bestimmte Scheibenformate gebunden.

Beim vertikalen Fördern von Glastafeln werden die Transportmittel sehr hoch beansprucht, da die gesamte Last über die scharfkantige Stirnseite der Glastafeln übertragen wird. Das betrifft sowohl die Transportrollen als auch andere Auflageflächen.

Es sind Fördereinrichtungen bekannt, bei denen die nahezu senkrecht stehenden Glastafeln auf Transportrollen aus verschleißfestem Material in Form eines Rollenganges bewegt werden (DE-A-30 18 492). Die Glastafeln stützen sich dabei seitlich auf einer um 6° geneigten und mit Rollen versehenen Wand ab. Es ist auch bekannt, zur Abstützung Luftkissen zu verwenden (DE-A-33 08 079). Diese Einrichtungen haben jedoch den Nachteil, daß sich die scharfkantigen Stirnseiten in die Rollen eindrücken ken und einen hohen Verschleiß an Rollen verursachen. Besonders hoch ist der Verschleiß beim Anfahren und Abbremsen der Glastafeln durch den Schlupf.

Um den letztgenannten Mangel zu vermeiden, wird das Einschneiden der Kanten oder Stirnseiten der Glastafeln dadurch reduziert, daß speziell dimensionierte Reibkupplungen Anwendung finden, die beim Anfahren und Abbremsen eine kontinuierliche Bewegung gewährleisten.

Es sind auch Fördereinrichtungen bekannt, bei welchen die Glastafeln an vertikal verlaufenden Bändern in der Ebene anliegen und durch Unterdruck gehalten werden (DE-A-35 29 892). Diese Einrichtungen erfordern einen hohen apparativen Aufwand Zur Erzeugung des Unterdruckes und für die dazu erforderlichen Steuerorgane.

Allen bekannten Einrichtungen haftet insbesondere der Mangel an, daß zwischen der auf der Kante aufliegenden Glastafel und der Transportrolle ein Schlupf eintritt, der die genaue Positionierung der Glastafeln an der Bearbeitungs- oder Stapelstation erschwert, Es sind folglich zur Abstellung dieses Mangels zusätzliche Maschinenbaugruppen erforderlich, die ebenfalls einem erheblichen Verschleiß unterliegen.

Der Erfindung liegt die Aufgabe zugrunde, eine einfach und robust ausgeführte Vorrichtung zu schaffen, mit der nahezu senkrecht angeordnete tafel- oder plattenförmige Werkstücke wie Glastafeln auch unterschiedlichster Größen oder Formate - sicher einzeln ergriffen, sachgerecht auf- und abgestapelt und auf eine nahezu senkrechte Fertigungslinie aufgelegt und von dieser auch abgenommen werden können, ohne daß die Teile der Vorrichtung übermäßig verschleißen.

Diese Aufgabe wird erfindungsgemäß mit einer Vorrichtung gelöst, welche die Merkmale des Anspruches 1 aufweist. Vorteilhafte Ausgestaltungen der Erfindung sind Gegenstand der Unteransprüche.

Durch die Erfindung wird, eine Vorrichtung geschaffen, mit der von einem nahezu senkrecht stehenden Glastafelblock Glastafeln unterschiedlichster Abmessungen einzeln gegriffen, abgestapelt, transportiert und auf eine nahezu senkrecht angeordnete Fertigungslinie aufgelegt werden können. Dabei ist eine Vereinzelung der jeweils obersten Glastafel des Glastafelblockes sicher gewährleistet. Dabei können auch, von einer nahezu senkrecht angeordneten Fertigungslinie einzeln ankommende Glastafeln unterschiedlichster Abmessungen mittig auf der Vorrichtung zentriert, abgenommen und zu einem ebenfalls nahezu senkrecht stehenden Glastafelblock sicher und bruchfrei gestapelt werden. Die Vorrichtung ist in der Lage, die Abmessungen der Glastafeln selbständig zu erkennen, die Glastafeln automatisch auf die Mitte der Vorrichtung zur genauen, kantengeraden Bildung des Glastafelblockes zu zentrieren sowie die zum Transport notwendigen Vakuumgreifer in Abhängigkeit von der Abmessung der Glastafel anzustellen. Außerdem ist die Vorrichtung in der Lage, ein leeres Transportgestell bzw. einen Glastafelblock bestimmter Dicke selbständig zu erkennen und sich auf diesen Auf- bzw. Abgabezustand automatisch einzustellen.

Die Vakuumgreifer sind dazu bestimmt, eine Glastafel zu greifen, während eines Transportes oder einer technologischen Operation zu halten und abzugeben, wobei beim Greifen und Abgeben keine Relativbewegungen zwischen der Saugerlippe und der Glastafel auftreten dürfen und Keiligkeiten zwischen der Vorrichtung und den Glastafeln ausgeglichen werden. Beim gruppenweisen Betreiben stehen die nicht benötigten Vakuumgreifer automatisch hinter der Arbeitslinie der Vorrichtung oder der Fertigungslinie bzw. der obersten Glastafel auf dem Glastafelblock zurück, d.h. können sich automatisch wechselnden Formaten anpassen. Das ganze System der Vakuumgreifer ist einfach, robust und ohne Abdichtung bewegter Teile ausgeführt und arbeitet wartungsfrei.

Mit einem Vertikalförderer von einer Fertigungslinie ankommende Glastafeln werden für das Aufstapeln oder zu einer Fertigungslinie, Bearbeitungseinrichtung oder zu Ablagerungsplätzen gefördert, wobei ein schlupffreies, verschleißarmes und bruchsicheres Fördern mit konstanter Geschwindigkeit gewährleistet ist.

Es ist von Vorteil, die Platten des Plattenbandes über die Breite des Zugmittels reichend auszuführen, um diese bei Verschleiß durch die scharfen Kanten der Glastafeln wenden bzw. drehen zu können, um die Gebrauchsdauer des Plattenbandes praktisch zu verdoppeln.

Die mit der Erfindung erreichten Vorteile sind im wesentlichen darin zu sehen, daß der gesamte apparative Aufwand für Auf- und Abstapelvorgänge stark reduziert wird. Beispielsweise entfallen besondere Zuführeinrichtungen für den Glastafelblock, der z. B. auf einem einfachen Gestell stehen kann, welches gegenüber der Vorrichtung nicht genau positioniert sein muß. Das sichere Vereinzeln von Glastafeln und das Erkennungssystem bezüglich des Formates der Glastafel und der Dicke des Glastafelblockes gewährleisten ein bruchfreies, genaues Auf- und Abstapeln von Glastafeln, wodurch Stillstandszeiten vermieden werden. Demzufolge ist die Vorrichtung sehr gut für automatisiert arbeitende Fertigungslinien geeignet, zumal sehr hohe Taktzeiten bzw. Geschwindigkeiten beim Auf- und Abstapeln erreicht werden. Vorteilhaft wird das durch den schlupffreien Transport der Glastafeln mit dem Vertikalförderer unterstützt, der außerdem einen geräuscharmen Lauf gewährleistet.

Bei dem erfindungsgemäßen Vakuumgreifer handelt es sich um ein einfaches, robustes und wartungsfreies System. Bei der Fertigung ist nur ein relativ geringer Genauigkeitsgrad erforderlich, da keine genauen Passungen notwendig sind. Es sind keine Abdichtungen bewegter Teile erforderlich, der Vakuumgreifer kann unter technologisch ungünstigen Bedingungen, z. B. beim Einsatz von Schleifemulsionen, problemlos betrieben werden. Bei wechselnden Formaten der Glastafeln kommen nur die Vakuumgreifer zum Einsatz, die eine Greiferfunktion ausführen. Es können also keine Beschädigungen, z. B. von den Glaskanten, der anderen Vakuumgreifer auftreten.

Im folgenden wird die Erfindung bezüglich des Auf- und Abstapelns, des Förderns und des Greifens einer Glastafel anhand von Zeichnungen näher erläutert. Es zeigt
Figur 1 einen Querschnitt einer erfindungsgemäßen Vorrichtung mit auf einem Plattenband stehender Glastafel und gegenüberstehendem Glastafelblock auf einem Transportgestell,
Figur 2 die Vorrichtung aus Fig. 1 in einer Vorderansicht,
Figur 3 einen Detailschnitt durch ein Glied eines Plattenbandes eines Vertikalförderers am Beispiel einer Rollenkette,
Figur 4 einen Detailausschnitt aus einem Plattenband eines Vertikalförderers am Beispiel einer Rollenkette und
Figur 5 einen Detailschnitt durch einen Vakuumgreifer.

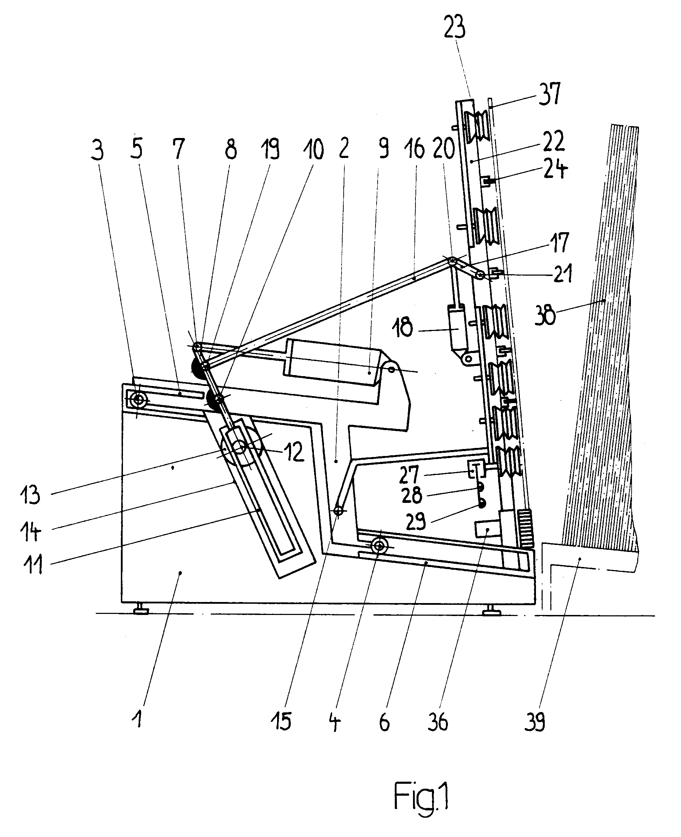

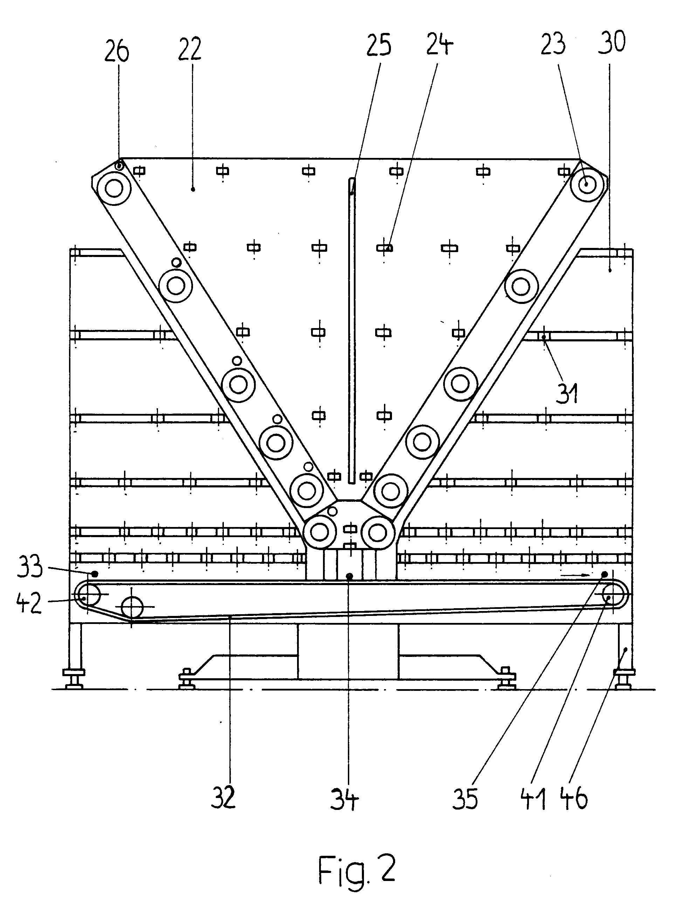

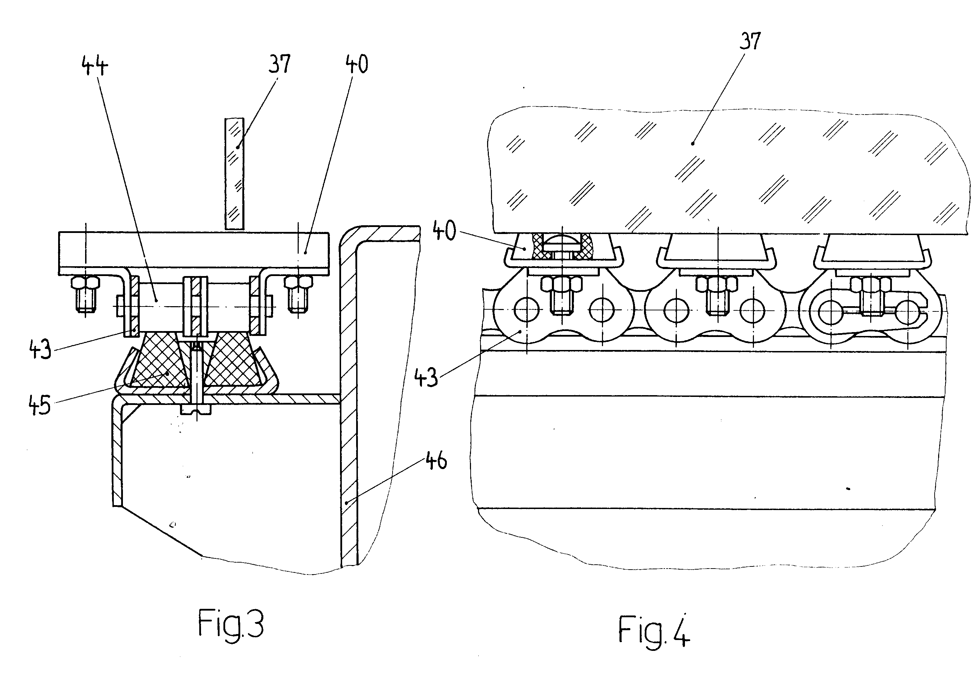

Nach den Figuren 1 bis 4 ist an einem Maschinengestell 1 ein Fahrgestell 2 über eine hintere Rolle 3 und eine vordere Rolle 4 sowie eine hintere Führung 5 und eine vordere Führung 6, über ein Gelenk 7 und eine Koppel 8 durch einen Antrieb 9 verfahrbar angeordnet. Die Koppel 8 ist in einem Gelenk 10 im Fahrgestell 2 drehbar gelagert und ist als Kulisse 11 fortgeführt.

Das Fahrgestell 2 stützt sich über die Koppel 8 und die Kulisse 11, über eine Abstützrolle 12, ein Zahnrad 13 sowie eine Zahnstange 14 am Maschinengestell 1 ab. Das gesamte System ist leicht nach vorn geneigt angeordnet.

Am Fahrgestell 2 ist an einem Gelenk 15 und über Koppeln 16 und 17 sowie einen Zylinder 18 und über Gelenke 19, 20 und 21 ein V-förmig ausgebildeter Saugerrahmen 22 befestigt. Am Saugerrahmen 22 sind in V-förmiger Anordnung Vakuumgreifer 23 befestigt, wobei sich die Abstände zwischen den Vakuumgreifern 23 in Richtung nach unten verringern. Ferner befinden sich am Saugerrahmen 22 Transportrollen 24, eine mittig angeordnete Druckleiste 25, Sensoren 26, die jeweils oberhalb der Vakuumgreifer 23 und in einer Reihe von ihnen sitzen, ein Zylinder 27 und Sensoren 28 und 29.

Die Vorrichtung ist mit einer V-förmig ausgeschnittenen, sich also der Form des Saugerrahmens 22 anpassenden Stützwand 30 mit Transportrollen 31, die in einer waagerechten Linie wie die Transportrollen 24 angeordnet sind, ausgerüstet. An der Stützwand 30 befinden sich am Anfang, in der Mitte und am Ende und oberhalb eines Plattenbandes 32 Sensoren 33, 34 und 35. Am Plattenband 32 befindet sich ein Impulsgeber 36. Eine auf dem Plattenband 32 befindliche einzelne Glastafel 37 wird entweder auf einen Glastafelblock 38 aufgestapelt oder von ihm abgestapelt. Der Glastafelblock 38 befindet sich auf einem Transportgestell 39.

Das Plattenband 32 mit Platten 40 läuft zwischen einem Antriebsrad 41 und einem Umlenkrad 42 und besteht aus einer Rollenkette 43 mit Rollen 44, die auf einer Bahn 45 laufen. Das gesamte System ist an einem Fördergestell 46 befestigt (Fig. 3, 4).

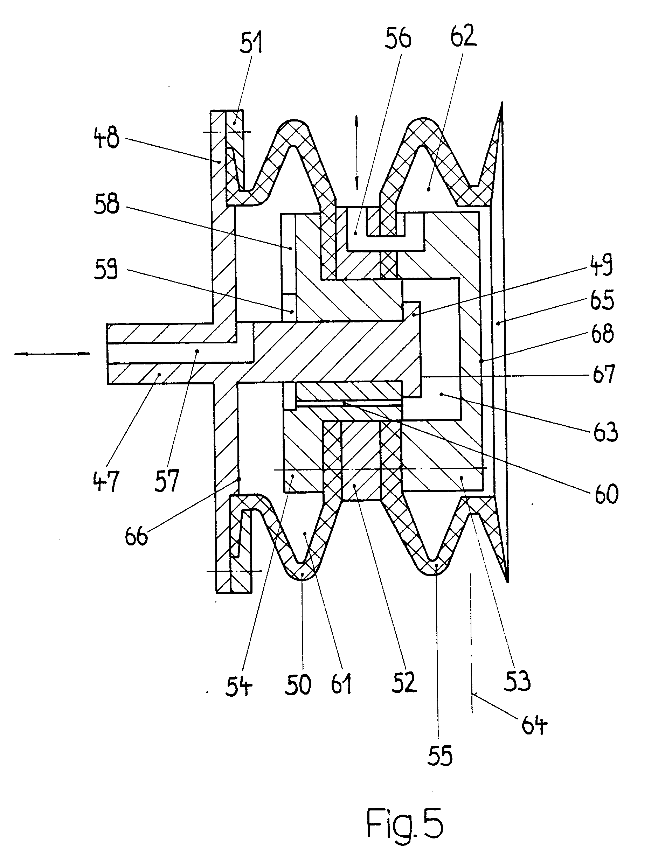

Nach Figur 5 ist an einem Halter 47 mit einer Dichtplatte 48 und einem Lagerzapfen 49 ein hinterer Sauger 50 mit einem Dichtring 51 an der Dichtplatte 48 befestigt. Über ein Verbindungsstück 52 und eine Anlage 53, die mit einer Gleitbuchse 54 versehen sind, ist mit dem Halter 47 ein vorderer Sauger 55 verschraubt. Beide Sauger 50, 55 sind vorteilhafterweise gleicher Abmessung und aus Gummi. In dem Verbindungsstück 52, dem vorderen Sauger 55 und der Anlage 53 befindet sich ein vorderer Druck- und Vakuumkanal 56 und im Heiter 47 ein hinterer Druck- und Vakuumkanal 57. In die Gleitbuchse 54 ist ein Verbindungskanal 58, ein Ringkanal 59 und ein Ausgleichskanal 60 eingearbeitet. Der Heiter 47, der hintere Sauger 50, die Dichtplatte 48, die Gleitbuchse 54 und die Anlage 53 bilden zusammen eine hintere Kammer 61. Eine vordere Kammer 62 wird von dem vorderen Sauger 55 und der Anlage 53 und eine weitere innere Kammer 63 von dem Lagerzapfen 49 und der Anlege 53 gebildet.

### Beispiel 1

In der Ausgangsstellung beim Aufstapeln einer Glastafel 37 auf einen Glastafelblock 38 mit einer Neigung zur Senkrechten von ca. 6° sind der Antrieb 9 und der Zylinder 18 ausgefahren. Die Transportrollen 24 des Saugerrahmens 22 bilden mit den Transportrollen 31 der Stützwand 30 eine ebene, ebenfalls um ca. 6° zur Senkrechten geneigte Fläche, auf der die Glastafel 37 abgestützt wird. Die Abstützrolle 12 befindet sich dabei im oberen Bereich der Kulisse 11. In diese Stellung gelangt die Abstützrolle 12 durch einen nicht dargestellten Antrieb über das Zahnrad 13 und die Zahnstange 14. Die Vakuumgreifer 23 sind eingefahren und befinden sich wie die Druckleiste 25 hinter der Glastafel 37 (in der Ausgangsstellung ist keine Glastafel 37 auf dem Plattenband 32 vorhanden). Die Sensoren 28 und 29 sind über den Zylinder 27 eingezogen, das Plattenband 32 befindet sich im Stillstand.

Von einer vorgelagerten, nicht dargestellten Fertigungslinie mit einer Neigung von ca. 6° zur Senkrechten kommend, wobei die erfindungsgemäße Vorrichtung selbst Bestandteil einer Fertigungslinie sein kann, bewegt sich durch das Plattenband 32 die Glastafel 37 in den Vertikalförderer bzw. über die Stützwand 30 und den Saugerrahmen 22, abgestützt durch die Transportrollen 31 und 24. Beim Einfahren der Glastafel 37 in den Vertikalförderer wird die Vorderkante der Glastafel 37 über den Sensor 33 erfaßt, der den Impulsgeber 36 aktiviert bzw. einschaltet und die gezählten Impulse als Äquivalent der Länge der Glastafel 37 in einem Speicher hinterlegt.

Das Abschalten des Impulsgebers 36 erfolgt ebenfalls durch den Sensor 33, sobald die Hinterkante der Glastafel 37 den Sensor 33 passiert hat. Beim Erfassen der Vorderkante der Glastafel 37 durch den Sensor 34 werden die im Speicher hinterlegten Impulse bis zur Hälfte rückwärts gezählt und das Plattenband 32 angehalten. Somit ist die eingefahrene Glastafel 37 mittig auf der erfindungsgemäßen Vorrichtung zentriert. Nun wird der Zylinder 18 eingefahren und damit über die Koppeln 16 und 17 der Saugerrahmen 22 gegenüber dem Fahrgestell 2 nach unten und nach vorn gestellt, so daß die Glastafel 37 geringfügig von der Stützwand, 30 angehoben wird. Anschließend wird durch die Sensoren 26 die Höhe der Oberkante der Glastafel 37 erfaßt und signalisiert, welche Vakuumgreifer 23 zu aktivieren bzw. einzuschalten sind. Diese greifen zu und saugen die Glastafel 37 an. Nun wird der Saugerrahmen 22 durch Ausfahren des Zylinders 18 wieder in seine alte Lage gebracht und damit die angesaugte Glastafel 37 vom Plattenband 32 abgehoben. Im Anschluß daran wird durch Einschalten des Antriebes 9 der Saugerrahmen 22 von der Stützwand 30 wegbewegt.

Dadurch, daß sich die Abstützrolle 12 ganz oben in der Kulisse 11 der Koppel 8 befindet, kann das Fahrgestell 2 gegenüber dem Maschinengestell 1 nur einen genau begrenzten Weg auf den hinteren und vorderen Rollen 4 und 5 in den hinteren und vorderen Führungen 5 und 6 zurücklegen. Für den Fall eines leeren Transportgestells 39 wäre also der relativ lange Weg bis zur Lehne des Transportgestelles 39 nicht überbrückbar. Deshalb wird über den ausgefahrenen Sensor 28 dieser Weg kontrolliert und in diesem Fall vom Sensor 28 ein nicht dargestellter Antrieb aktiviert, der die Abstützrolle 12 in der Kulisse 11 so weit nach unten fährt, bis sich das Fahrgestell 2 und somit der Saugerrahmem 22 mit der Glastafel 37 der Lehne des Transportgestells 39 zwecks Absetzen der Glastafel 37 genähert hat. Der Sensor 28 schaltet dann den Antrieb des Zahnrades 13 ab.

Durch nachfolgendes Einfahren des Zylinders 18 und Belüften der Vakuumgreifer 23 wird die Glastafel 37 auf dem Transportgestell 39 abgesetzt. Die Vakuumgreifer 23 ziehen sich gleichzeitig wieder hinter die Transportrollen 24 des Saugerrahmens 22 zurück.

Die Ausgangsstellung wird wieder hergestellt, indem der Antrieb 9 und der Zylinder 18 gleichzeitig ausgefahren werden. Noch in der vorderen Lage der Vorrichtung wird das Zahnrad 13 durch den nicht dargestellten Antrieb in umgekehrter Drehrichtung so lange angetrieben, bis der Sensor 29 erkennt, daß sich die Vorrichtung in genügendem Abstand vom Glastafelblock 38, also von der zuletzt abgesetzten Glastafel 37, befindet.

### Beispiel 2

Beim Abstapeln einer Glastafel 37 von einem Glastafelblock 38 befindet sich die Vorrichtung zunächst in der Ausgangslage; der Antrieb 9 und der Zylinder 18 sind ausgefahren, die Vakuumgreifer 23 sind eingefahren, der Saugerrahmen 22 befindet sich hinten, die Abstützrolle 12 und das Zahnrad 13 befinden sich oben.

Zunächst wird durch Betätigung des Antriebes 9 über das Koppelgetriebe der Saugerrahmen 22 um den kleinsten Schritt nach vorn gefahren und gleichzeitig über die Koppeln 8, 16 und 17 um das Gelenk 15 annähernd parallel zum Glastafelblock 38 gestellt. Die genaue parallele Lage wird durch Einfahren des Zylinders 18 hergestellt. In jedem Fall befindet sich der Saugerrahmen 22 in einem unbekannten Abstand vom Glastafelblock 38.

Durch Antreiben des Zahnrades 13 bewegt sich die Abstützrolle 12 in der Kulisse 11 nach unten und dadurch der Saugerrahmen 22 auf den Glastafelblock 38 zu, bis der Sensor 28 eine Glastafel 37 erkennt. Die Sensoren 26 erfassen die Größe der Glastafel 37 und schalten die notwendigen Vakuumgreifer 23 zu, die die Glastafel 37 ansaugen. Gleichzeitig drückt die Druckleiste 25 über die ganze Höhe der angesaugten Glastafel 37 so, daß sich die Glastafel 37 annähernd von unten nach oben steigend in einem immer größer werdenden Bogen verspannt und sich dadurch von der nächsten Glastafel 37 auf dem Glastafelblock 38 löst.

Durch Ausfahren des Zylinders 18 wird die Glastafel 37 vom Glastafelblock 38 abgehoben. Anschließend wird über die durch den Zylinder 27 gesteuerten Sensoren 28 und 29 kontrolliert, ob nur eine Glastafel angesaugt wurde. Durch Ausfahren des Antriebes 9 wird über den Zylinder 18 die Glastafel 37 auf das Plattenband 32 gestellt, wobei zuvor die Druckleiste 25 eingefahren wird. Nach erneutem Ausfahren des Zylinders 18 bilden der Saugerrahmen 22 und die Stützwand 30 eine Fläche, und die auf dem Plattenband 32 befindliche Glastafel 37 kann ungehindert weitergefördert werden.

Für den Fall, daß der Sensor 29 signalisiert, daß zwei Glastafeln 37 abgehoben wurden, erfolgt durch kurzzeitiges Ein- und Ausfahren des Zylinders 18 eine Trennung.

### Beispiel 3

Beim Fördern einer Glastafel 37 dient die Stützwand 30, die so lang ist wie der Förderweg der Glastafel 37 und so hoch ist wie die maximale Höhe der Glastafel 37, als Anlagefläche. Unterhalb der Stützwand 30 ist das Plattenband 32 so angeordnet, daß die Glastafel 37 auf einer Hälfte der Platten 40 aufsitzt. Das Plattenband 32 läuft zwischen dem Antriebsrad 41 und dem Umlenkrad 42, die an je einem Ende der Stützwand angeordnet sind und etwas tiefer liegen als die zwischen ihnen angeordnete Bahn 45 für das Plattenband 32. Das Plattenband 32 besteht aus der Rollenkette 43, deren Glieder je eine Platte 40 tragen. Die Rollen 44 laufen auf der Bahn 45 aus Elastomer. Die Platten 40 reichen über die Breite der Rollenkette 43 hinaus und sind verdrehbar angeordnet, um bei Verschleiß der ersten Hälfte der Platten 40 die zweite Hälfte nutzen zu können.

Der nicht dargestellte Antrieb zum Geschwindigkeitsausgleich vorhergehender und nachfolgender Anlagenteile ist vorteilhafterweise mit einem Freilauf und einer elektromagnetischen Kupplung mit selbsttätigem mechanischen Bremssystem zwischen dem Antriebsrad 41 des Plattenbandes 32 und dem Fördergestell 46 des Vertikalförderers ausgerüstet.

### Beispiel 4

Zum Greifen einer Glastafel 37 mit einer oder mehreren Vakuumgreifern 23 auf dem Glastafelblock 38, Halten während des Transportes zur Vorrichtung und Abgeben auf diese oder auf eine Fertigungslinie wird im Ausgangszustand über den hinteren Druck- und Vakuumkanal, 57 die hintere Kammer 61 evakuiert, und der hintere Sauger 50 zieht sich zusammen, bis die Gleitbuchse 54 an dem Anschlag 57 des Lagerzapfens 49 anliegt. Der der äußeren Seite der auf dem Glastafelblock 38 stehenden obersten Glastafel 37 zugekehrte vordere Sauger 55 jedes Vakuumgreifer wird über die Gleitbuchse 54 und das Verbindungsstück 52 um diesen Hubbetrag, z. B. 30 mm, zurückgenommen, und die Dichtlippe 65 des vorderen Saugers 55 befindet sich vor der Arbeitslinie 64. Unter Arbeitslinie 64 ist hier die äußere Seite der auf dem Glastafelblock 38 stehenden Glastafel 37 zu verstehen, aber auch die Lauflinie der Vorrichtung oder einer Fertigungslinie.

Durch Belüften oder Einlassen von Druckluft über den hinteren Druck- und Vakuumkanal 57 dehnt sich der hintere Sauger 50 aus und bewegt sich der Vakuumgreifer 23 in Richtung der Arbeitslinie 64, bis die Dichtlippe 65 des vorderen Saugers 55 die Glastafel 37 berührt. Gleichzeitig wird über den vorderen Druck- und Vakuumkanal 56 die vordere Kammer 62 evakuiert. Der vordere Sauger 55 greift die Glastafel 37 und zieht sie bis zum Anschlag 68 der Anlage 53, so daß sie nun transportiert bzw. umgesetzt werden kann.

Insbesondere bei großflächigen Glastafeln ist es von Vorteil, das Greifen der Glastafel 37 und Abnehmen vom Glastafelblock 38 durch erneutes Evakuieren der hinteren Kammer 61 zu unterstützen und erst kurz vor dem Abgeben auf die Fertigungslinie diese Kammer zu belüften. In beiden Fällen ist über das starre System der Anschläge 66 und 67 ein sicherer Transport gewährleistet. Das Heranfahren des Vakuumgreifers bzw. der Vorrichtung an den Glastafelstapel 38, also gewissermaßen die Vorpositionierung, kann relativ grob erfolgen, da sich der oder die Vakuumgreifer 23 aufgrund des relativ großen Hubweges des hinteren Saugers 50 unterschiedlichen Abständen anpassen, also auch Keiligkeiten ausgleichen können. Außerdem ist über die Beweglichkeit des vorderen Saugers 55 und des hinteren Saugers 50 gewährleistet, daß die Glastafel 37 stets senkrecht gegriffen wird.

Beim Abgeben auf die Vorrichtung wird die vordere Kammer 62 über den vorderen Druck- und Vakuumkanal 56 belüftet, und der Vakuumgreifer 23 gibt die Glastafel 37 frei. Gleichzeitig wird die hintere Kammer 61 evakuiert und der Vakuumgreifer 23 bzw. der vordere Sauger 55 hinter die Lauflinie 64 der Vorrichtung zurückgezogen. Die Glastafel 37 kann weitergefördert werden.

Der Vakuumsauger oder Vakummgreifer kann auch vorteilhaft als Halterung einer Glastafel beim Kantenbearbeiten z. B. durch Schleifen oder Polieren zur Abgabe auch waagerecht auf eine Fertigungslinie oder einen Arbeitstisch benutzt werden. In diesem Fall wird in die hintere Kammer 61 Druckluft eingeleitet, wodurch gegenüber der angesaugten Glastafel und dem Arbeitstisch eine dem Hubweg entsprechende ausreichende Arbeitshöhe geschaffen wird.

In jeder Bewegungsphase der Gleitbuche 54 sind zur Gewährleistung der erforderlichen Vakuum- und Druckverhältnisse der vordere Druck- und Vakuumkanal 56 und der hintere Druck- und Vakuumkanal 57 über den Verbindungskanal 58, den Ringkanal 59 und den Ausgleichskanal 60 mit der inneren Kammer 63 verbunden.

Bei in Gruppen angeordneten Vakuumgreifern können die unterschiedlichsten Formate gegriffen werden, wobei die nicht benötigten Vakuumgreifer 23 hinter der Arbeitslinie 64 zurückstehen.

## Patentansprüche

1. Vorrichtung zum Greifen, Auf- und Abstapeln, Auflegen auf eine Fertigungslinie und Transportieren von nahezu senkrecht angeordneten tafel- oder plattenförmigen Werkstücken (37) wie Glastafeln,
- mit einem Maschinengestell (1),
- mit einem leicht nach vorne geneigt am Maschinengestell (1) verfahrbar abgestützten Fahrgestell (2),
- mit einem am Fahrgestell (2) über ein Koppelgetriebe pneumatisch kipp-, heb- und senkbar angeordneten Saugerrahmen (22),
- mit am Saugerrahmen (22) in V-förmiger Anordnung in übereinander liegenden Reihen angebrachten Vakuumgreifern (23),
- mit am Saugerrahmen (22) oberhalb jeder Reihe von Vakuumgreifern (23) angeordneten Sensoren (26) zum Bestimmen der Lage der oberen Kante eines plattenförmigen Werkstückes (37),
- mit einer sich mittig auf dem Saugerrahmen (22) befindlichen ausfahrbaren Druckleiste (25) und
- mit einem am Fahrgestell (2) fest angebrachten Vertikalförderer für die plattenförmigen Werkstücke (37),
wobei der Vertikalförderer eine entsprechend dem Saugerrahmen (22) ausgeschnittene, in einem Winkel von ca. 6° zurückgeneigte feststehende Stützwand (30) und ein im unteren Bereich der Stützwand (30) an einem Fördergestell (46) befestigtes, antreibbar endlos umlaufendes horizontales Plattenband (32) aufweist und wobei die Stützwand (30) am Anfang, in der Mitte und am Ende des Plattenbandes (30) mit Sensoren (33, 34, 35) zum Feststellen der vorderen und der hinteren Kante eines auflaufenden Werkstückes (37) bestückt und ein von diesen Sensoren zu betätigender Impulsgeber (36) zum Bestimmen der Mittellage des auf dem Plattenband (30) auflaufenden Werkstückes (37) vorgesehen ist.

2. Vorrichtung nach Anspruch 1, dadurch gekennzeichnet, daß die Vakuumgreifer (23) von den ihnen zugeordneten Sensoren (26) gesteuert einzeln in die Betriebsposition aus- oder aus der Betriebsposition zurückfahrbar ausgebildet sind.

3. Vorrichtung nach Anspruch 1 oder 2, dadurch gekennzeichnet, daß der gegenseitige Abstand der am Saugerrahmen (22) angeordneten Vakuumgreifer (23) von oben nach unten abnimmt.

4. Vorrichtung nach einem der Ansprüche 1 bis 3, dadurch gekennzeichnet, daß der Saugerrahmen (22) V-förmig ausgebildet und die Stützwand (30) V-förmig ausgeschnitten ist.

5. Vorrichtung nach einem der Ansprüche 1 bis 4, dadurch gekennzeichnet, daß der Saugerrahmen (22) und die Stützwand (30) mit Transportrollen (24, 31) für plattenförmige Werkstücke (37) versehen sind.

6. Vorrichtung nach einem der Ansprüche 1 bis 5, dadurch gekennzeichnet, daß im unteren Bereich des Saugerrahmens (22) Sensoren (28, 29) zum Bestimmen des Abstandes des Saugerrahmens von einem Block (38) aus gestapelten plattenförmigen Werkstücken (37) bzw. von einem Transportgestell (39) für die gestapelten plattenförmigen Werkstücke (37) mittels eines Zylinders (27) ausfahrbar angeordnet sind.

7. Vorrichtung nach einem der Ansprüche 1 bis 6, dadurch gekennzeichnet, daß das Plattenband (32) des Vertikalförderers ein formschlüssiges Zugmittel aufweist, welches in regelmäßigen Abständen mit Platten (40) aus einem verschleißfesten, elastischen Material bestückt ist, daß das Zugmittel über ein Antriebsrad (41) und ein Umlenkrad (42) und auf einer Bahn (45) aus elastischem Material geführt ist und daß Antriebs- und Umlenkrad (41, 42) tiefer als die Bahn (45) angeordnet sind.

8. Vorrichtung nach Anspruch 7, dadurch gekennzeichnet, daß das formschlüssige Zugmittel eine Rollenkette (43) ist, deren einzelne Glieder mit den Platten (40) bestückt und deren Rollen (44) auf der Bahn (45) geführt sind.

9. Vorrichtung nach Anspruch 7 oder 8, dadurch gekennzeichnet, daß die Platten (40) über die Breite des Zugmittels reichend ausgeführt und umsetzbar angeordnet sind.

10. Vorrichtung nach einem der Ansprüche 1 bis 9, dadurch gekennzeichnet, daß jeder Vakuumgreifer (23) an einem Halter (47) mit einer Dichtplatte (48) und einem Lagerzapfen (49) einen hinteren Sauger (50) mit einem Dichtring (51) an der Dichtplatte (48) und über ein Verbindungsstück (52) und eine Anlage (53), die mit einer Gleitbuchse (54) versehen sind, einen vorderen Sauger (55) aufweist, wobei sich im Verbindungsstück (52), im vorderen Sauger (55) und in der Anlage (53) ein vorderer Druck- und Vakuumkanal (56), der mit einer vom vorderen Sauger (55) und der Anlage (53) gebildeten vorderen Kammer (62) in Verbindung steht, befindet und sich im Halter (47) ein hinterer Druck- und Vakuumkanal (57), der mit einer durch den Halter (47), den hinteren Sauger (50), die Dichtplatte (48), die Gleitbuchse (54) und die Anlage (53) gebildeten hinteren Kammer (61) in Verbindung steht, befindet und in der Gleitbuchse (54) ein Verbindungskanal (58), ein Ringkanal (59) und ein Ausgleichskanal (60), der mit einer durch den Lagerzapfen (49) des Halters (47) und der Anlage (53) gebildeten inneren Kammer (63) in Verbindung steht, eingearbeitet sind.

## Claims

1. Apparatus for gripping, stacking, destacking, placing on a production line and conveying substantially vertically arranged pane or plate-like workpieces (37), such as glass panes, having a machine frame (1), having a slightly forwardly inclined chassis (2) movably supported on the machine frame (1), having a sucker frame (22) pneumatically arranged in tiltable, raisable and lowerable manner by means of a linkage on the chassis (2), having vacuum grippers (23) arranged on the sucker frame (22) in V-shaped arrangement in superimposed rows, having sensors (26) for determining the position of the upper edge of a plate-like workpiece (37) arranged on the sucker frame (22) above each row of vacuum grippers (23), having an extendable pressure strip (25) located centrally on the sucker frame (22) and having a vertical conveyor for the plate-like workpieces (37) fixed to the chassis (2), the vertical conveyor having a support wall (30) cut out corresponding to the sucker frame (22) and backwardly inclined at an angle of approximately 6° and a drivably, continuously rotating, horizontal plate belt (32) fixed in the lower area of the support wall (30) to a jig trolley (46), the support wall (30) being equipped at the start, in the centre and at the end of the plate belt (30) with sensors (33, 34, 35) for detecting the leading and trailing edge of an incoming workpiece (37) and a pulse generator (36) actuated by these sensors for determining the central position of the workpiece (37) running onto the plate belt (30).

2. Apparatus according to claim 1, characterized in that the vacuum grippers (23) controlled by their associated sensors (26) are constructed so as to be individually introduceable into or removable from the operating position.

3. Apparatus according to claim 1 or 2, characterized in that the reciprocal spacing of the vacuum grippers (23) arranged on the sucker frame (22) decreases from top to bottom.

4. Apparatus according to one of the claims 1 to 3, characterized in that the sucker frame (22) is V-shaped and the support wall (30) is cut out in V-shaped manner.

5. Apparatus according to one of the claims 1 to 4, characterized in that the sucker frame (22) and the support wall (30) are provided with conveying rollers (24, 31) for plate-like workpieces (37).

6. Apparatus according to one of the claims 1 to 5, characterized in that in the lower area of the sucker frame (22) are provided sensors (28, 29) for determining the spacing of the sucker frame from a stack (38) of stacked, plate-like workpieces (37) or from a conveyor frame (39) for the stacked, plate-like workpieces (37) and extendable by means of a cylinder (27).

7. Apparatus according to one of the claims 1 to 6, characterized in that the plate belt (32) of the vertical conveyor has a positive pulling means, which is provided at regular intervals with plates (40) made from a wear-resistant, elastic material, that the pulling means is guided on an elastic material track (45) by means of a driving wheel (41) and a guide wheel (42) and that the driving and guide wheels (41, 42) are positioned lower than the track (45).

8. Apparatus according to claim 7, characterized in that the positive pulling means is constituted by a roller chain (43), whose individual links are covered with the plates (40) and whose rollers (44) are guided on the track (45).

9. Apparatus according to claim 7 or 8, characterized in that the plates (40) extend over the width of the pulling means and can be reversed.

10. Apparatus according to one of the claims 1 to 9, characterized in that each vacuum gripper (23) on a holder (47) with a sealing plate (48) and a journal (49) has a rear sucker (50) with a sealing ring (51) on the sealing plate (48) and by means of a connecting piece (52) and a bearing surface (53), which are provided with a sliding sleeve (54), a front sucker (55), whereby in the connecting piece (52), in the front sucker (55) and in the bearing surface (53) is provided a front pressure and vacuum duct (56), which is connected to a front chamber (62) formed by the front sucker (55) and the bearing surface (53) and in the holder (47) there is a rear pressure and vacuum duct (57), which is connected to a rear chamber, (61) formed by the holder (47), the rear sucker (50), the sealing plate (48), the sliding sleeve (54) and the bearing surface (53), and in the sliding sleeve (54) are formed a connecting duct (58), a ring duct (59) and a compensating duct (60), which are connected to an inner chamber (63) formed by the journal (49) of the holder (47) and the bearing surface (53).

## Revendications

1. Dispositif pour prendre, empiler et désempiler, déposer sur une ligne de fabrication et transporter des pièces (37) en forme de panneaux ou de plaques, disposées approximativement verticalement, comme des panneaux de verre, comportant :
- un bâti de machine (1),
- un châssis mobile (2), soutenu avec possibilité de déplacement sur le bâti de machine (1) en étant légèrement incliné vers l'avant,
- un châssis d'aspiration (22) disposé sur le châssis mobile (2) de façon à pouvoir être basculé, relevé et descendu pneumatiquement par l'intermédiaire d'une transmission d'accouplement,
- des organes à ventouses (23) installés sur le châssis d'aspiration (22) avec une disposition en forme de V et dans des rangées situées l'une au-dessus de l'autre,
- des capteurs, disposés sur le châssis d'aspiration (22) au-dessus de chaque rangée d'organes de ventouses (23) pour déterminer la position du bord supérieur d'une pièce (37) en forme de panneau,
- une règle de pression (25), pouvant être sortie et se trouvant au milieu sur le châssis d'aspiration (22), et
- un transporteur vertical, installé en position fixe sur le châssis mobile (2), pour les pièces (37) en forme de panneaux,
- le transporteur vertical comportant une paroi d'appui (30) fixe, inclinée vers l'arrière d'un angle d'environ 6° et évidée en correspondance au châssis d'aspiration (22) ainsi qu'une bande de plaques horizontale (32), tournant sans fin en étant entraînée et fixée, dans une zone inférieure de la paroi d'appui (30), sur un châssis de transport (36), la paroi d'appui (30) étant pourvue, au début, au milieu et à la fin de la bande de plaques (32), de capteurs (33, 34, 35) servant à détecter le bord avant et le bord arrière d'une pièce en déplacement (37), et il est prévu un générateur d'impulsions (36), pouvant être actionné par les capteurs précités, pour déterminer la position centrale de la pièce (37) à l'extrémité de la bande de plaques (32).

2. Dispositif selon la revendication 1, caractérisé en ce que les organes à ventouses sont agencés de façon à être commandés individuellement par les capteurs (26) qui leur sont associés de façon à pouvoir être amenés dans la position de service ou bien à pouvoir être rétractés à partir de cette position de service.

3. Dispositif selon une des revendications 1 ou 2, caractérisé en ce que l'espacement mutuel des organes à ventouses disposés sur le châssis d'aspiration (22) diminue du haut vers le bas.

4. Dispositif selon une des revendications 1 à 3, caractérisé en ce que le châssis d'aspiration (22) est agencé en forme de V et la paroi d'appui (30) est évidée en forme de V.

5. Dispositif selon une des revendications 1 à 4, caractérisé en ce que le châssis d'aspiration (22) et la paroi d'appui (30) sont pourvus de rouleaux de transport (24, 31) pour des pièces (37) en forme de panneaux.

6. Dispositif selon une des revendications 1 à 5, caractérisé en ce que, dans une zone inférieure du châssis d'aspiration (22), il est prévu des capteurs (28, 29) servant à déterminer l'espacement entre le châssis d'aspiration et un ensemble (38) de pièces (37) en forme de panneaux empilés ou bien un châssis de transport (39) pour les pièces (37) en forme de panneaux empilés, qui sont disposés de façon à pouvoir être sortis au moyen d'un cylindre (27).

7. Dispositif selon une des revendications 1 à 6, caractérisé en ce que la bande de plaques (32) du transporteur vertical comporte un moyen de traction opérant par complémentarité de formes et qui est pourvu, à intervalles réguliers, de plaques (40) formées d'un matériau élastique et résistant à l'usure, en ce que le moyen de traction est guidé, par l'intermédiaire d'une roue d'entraînement (41) et d'une roue de renvoi (42), sur une voie (45) formée d'un matériau élastique et en ce que la roue d'entraînement (41) et la roue de renvoi (42) sont disposées plus bas que la voie (45).

8. Dispositif selon la revendication 7, caractérisé en ce que le moyen de traction opérant par complémentarité de formes est une chaîne à rouleaux (43), dont les différents maillons sont équipés des plaques (40) et dont les rouleaux (44) sont guidés sur la voie (45).

9. Dispositif selon la revendication 7 ou 8, caractérisé en ce que les plaques (40) sont agencées de façon à s'étendre sur la largeur du moyen de traction et sont disposées de façon à pouvoir être retournées.

10. Dispositif selon une des revendications 1 à 9, caractérisé en ce que chaque organe à ventouses (23) comporte, sur un support (47) pourvu d'une plaque d'étanchéité (48) et d'un tourillon d'appui (49), une ventouse arrière (50) montée avec une bague d'étanchéité (51) sur la plaque d'étanchéité (48) et, par l'intermédiaire d'une pièce de liaison (52) et d'un organe d'appui (53), qui sont pourvus de manchon de glissement (54), une ventouse avant (55), en ce qu'il est prévu dans la pièce de liaison (52), dans la ventouse avant (55) et dans l'organe d'appui (53) un canal avant de pression et de vide (56), qui est en communication avec une chambre avant (62), formée par la ventouse avant (55) et l'organe d'appui (53) et en ce qu'il est prévu dans le support (47) un canal arrière de pression et de vide (57), qui est en communication avec une chambre arrière (61), formée par le support (47), la ventouse arrière (50), la plaque d'étanchéité (48), le manchon de glissement (54) et l'organe d'appui (53), tandis qu'il est prévu dans le manchon de glissement (54) un canal de liaison (58), un canal annulaire (59) et un canal d'équilibrage (60), qui est en communication avec une chambre intérieure (63), formée par le coussinet (49) du support (47) et l'organe d'appui (53).
